# EUROPEAN PATENT SPECIFICATION

(11) **EP 3 437 896 B1**
(45) Date of publication and mention of the grant of the patent: **04.03.2020**
(21) Application number: 18187342.3
(22) Date of filing: 03.08.2018
(51) Int. Cl.: B60B 27/00, B60T 8/32

(54) **WHEEL FOR A MOTORCYCLE AND METHOD FOR MANUFACTURING A HUB OF A WHEEL FOR A MOTORCYCLE**
RAD FÜR EIN MOTORRAD UND VERFAHREN ZUR HERSTELLUNG EINER NABE EINES RADES FÜR EIN MOTORRAD
ROUE DE MOTOCYCLE ET PROCÉDÉ DE FABRICATION D'UN MOYEU D'UNE ROUE DE MOTOCYCLE

(30) Priority: 04.08.2017 IT 201700090856
(43) Date of publication of application: 06.02.2019
(73) Proprietor: YAMAHA MOTOR CO., LTD., Iwata-shi Shizuoka 438-8501 (JP)
(72) Inventor: SPINELLI, Carlo, Shizuoka 438-8501 (JP)
(74) Representative: Di Sciuva, Michele

(56) References cited:
- EP-A1- 1 886 839
- EP-A2- 1 088 751
- CN-A- 105 500 007
- CN-U- 205 270 927
- CN-U- 206 169 639

## Description

### CROSS-REFERENCE TO RELATED APPLICATIONS

*This application claims priority from Italian Patent Application No.* 102017000090856 *filed on 04*/*08*/*2017.*

The present invention relates to a wheel for a motorcycle.

The present invention also relates to a method for manufacturing a hub of a wheel for a motorcycle.

Motorcycles are known comprising a body, a front wheel and a rear wheel which are operatively connected to the body.

Motorcycles are also known comprising one rear wheel and two front wheels, or one front wheel and two rear wheel, or two front and two rear wheels.

Furthermore, motorcycle are also known with two front or rear wheels, which are mounted in such a way to be leaning with respect to the body.

In greater detail, each rear/front wheel comprises:
- a hollow hub;
- a tire mounted on a circular rim; and
- one or two disk brakes configured to interact with a selectively actuatable caliper to brake or arrest the wheel.

The hub is coaxially mounted about an axle fixed to the body of the motorcycle.

In one known solution, the rear/front wheel comprises a plurality of wire spokes, which connect the hub and the rim.

In another known solution, the rear/front wheel is a so-called cast wheel preferably made of an alloy of aluminium or magnesium and integrally defining the hub and a rim.

In case of a driving wheel, the hub is rotatably mounted about the axle and driven in rotation about its own axis by an output member of an engine. Accordingly, the rim and the tire rotate about its own axis.

In case of a driven wheel, the axle is fixed to a nonrotating part of the body and a bearing is interposed between the hub and the axle, so as to allow the rim and the tire to rotate about its own axis.

In both the cases, the disk brakes can be either fitted to the hub of the wheel or to the rim of the wheel.

Motorcycle are also known comprising an anti-blocking system known also as ABS and applied to at least one of the wheels with the aim of preventing the blocking of this wheel in case of braking.

Very briefly, the anti-blocking system comprises a transducer for generating a signal associate to the rotational speed of the wheel and an actuator for inhibiting the breaking action in case the detected speed is lower than a threshold value.

In one embodiment, the transducer comprises, in turn,:
- a disk provided with a plurality of circumferentially spaced grooves or protuberances and mounted to rotate substantially at the same rotational speed of the wheel; and
- a proximity sensor, which is able to detect the presence of the grooves or the protuberances without any physical contact.

Depending on the configuration of the transducer, the proximity sensor can be optical, capacitive or inductive.

In the known solution, the disk of the sensor is fixed to the disk brake, which is, in turn, fixed to the hub of the wheel.

Thus, the inevitable tolerances associated to the mounting of the disk of the sensor on the disk brake add to the inevitable tolerances associated to the mounting of the disk brake on the hub.

The resulting tolerance chain inevitably affects the precision in the coaxial mounting of the disk with respect to the axis of the axle.

Accordingly, this tolerance chain affects the repeatability of the value of rotational speed of the wheel actually detected by the sensor, thus penalizing the overall precision and repeatability of the operation of the anti-blocking system.

As a matter of fact, the actuator of the anti-blocking system is required to inhibit the braking action with a very high frequency, e.g. 60 times for minute. Thus, every imprecision in the measure of the rotational speed of the wheel can affect the operation of the anti-blocking system.

A need is therefore felt in the sector to increase as far as possible the precision and the repeatability of the value of rotational speed of the wheel actually detected by the sensor.

Furthermore, in case of wheels with wire spokes, a need is felt in the sector to increase these precision and the repeatability, while reducing at the same time the risk of interference with the tool which mounts the wire spokes on the hub.

Finally, a need is felt in the sector to manufacture the hub in such a way to reduce as far as possible the concentricity tolerance of the disk with respect to the axle.

It is an object of the present invention to provide a wheel for a motorcycle, allowing to meet at least one the aforementioned need in a simple and cost-effective manner.

EP-A-1886839 discloses a wheel motorcycle according to the preamble of claim 1 and a method of manufacturing a hub according to the preamble of claim 14.

This object is achieved by a wheel motorcycle, as claimed in claim 1.

The present invention also relates to a method for manufacturing a hub of a wheel for a motorcycle, as claimed in claim 14.

One preferred, non-limiting embodiment of the present invention will be described by way of example with reference to the accompanying drawings, in which:
- Figure 1 is a lateral view of a motorcycle according to the present invention comprising a wheel according to the present invention;
- Figure 2 is an exploded front view in an enlarged scale of some components of the wheel of Figure 1;
- Figure 3 is an exploded perspective view in a further enlarged scale of the components shown in Figure 2;
- Figure 4 is a further enlarged view of the components of Figures 2 and 3 when assembled; and
- Figure 5 is a section along line V-V of Figure 4.

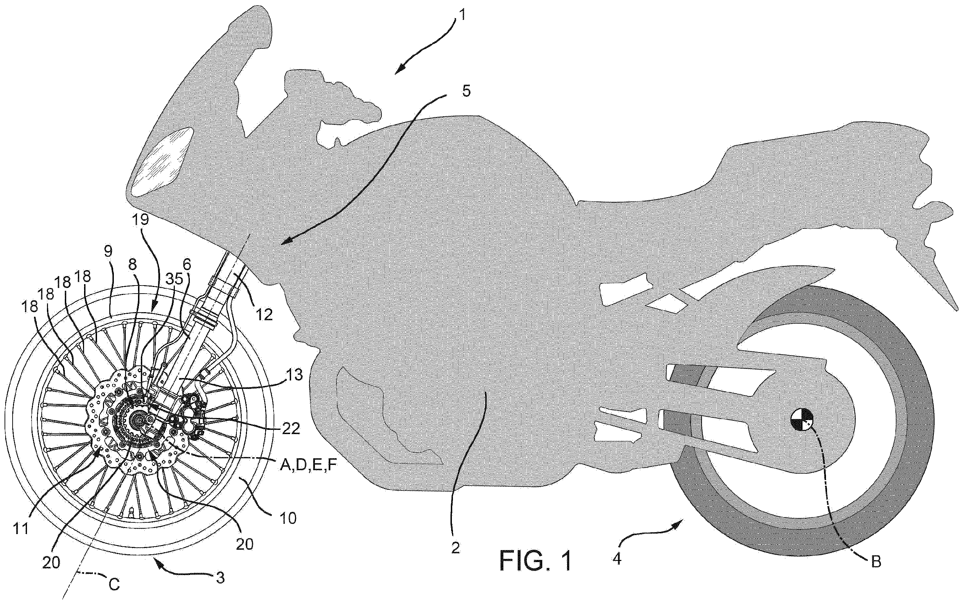

With reference to Figure 1, numeral 1 indicates a motorcycle.

In the following of the present description, expressions like "front", "rear", "top" and "bottom" are used with reference to a normal advancing direction and operative position of motorcycle 1 shown in the attached Figures.

Motorcycle 1 substantially comprises:
- a body 2,
- a front wheel 3 and a rear wheel 4;
   - a steering mechanism 5 which rotatably supports front wheel 3 and is operatively connected to a not shown handlebar which can be steered with respect to body 2.

Front wheel 3 and rear wheel 4 are rotatable about respective axes A, B.

In the embodiment shown, rear wheel 4 is a driving wheel and front wheel 3 is a driven wheel.

In greater detail, steering mechanism 5 is shown limitedly to a pair of forks 6 extending along respective axes C parallel to one another and transversal to axis A.

In the embodiment shown, forks 6 straddle front wheel 3.

In particular, each fork 6 comprises a stanchion 12 fixed to the handlebar and a slider 13 fixed to front wheel 3.

Each slider 13 is slidable about relative axis C with respect to corresponding stanchion 12.

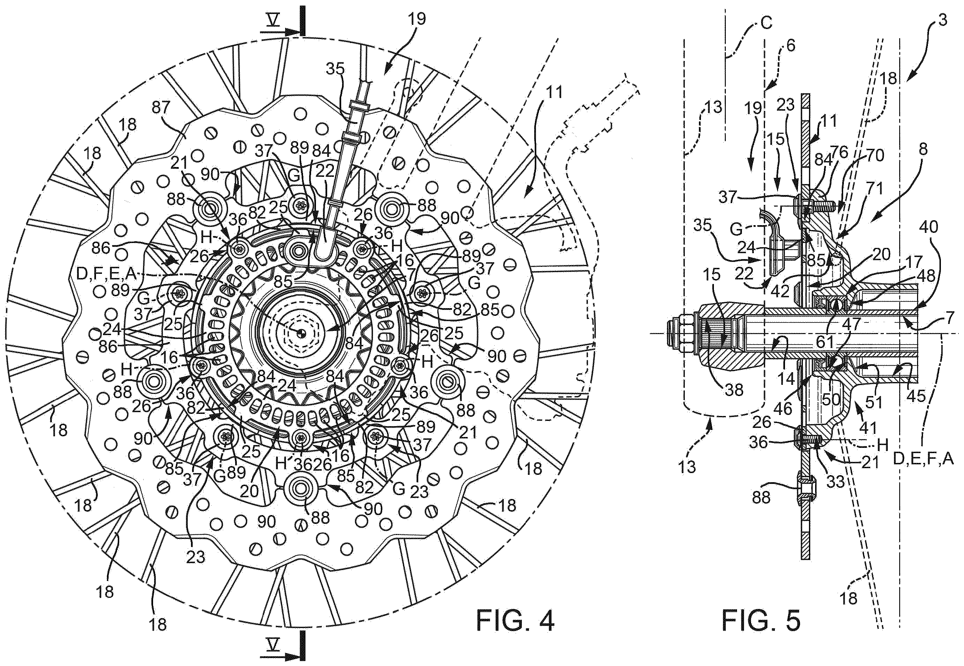

Front wheel 3 comprises (Figures 1 and 5):
- an axle 7 extending about axis A;
   - a hub 8 having an axis D and rotatable with respect to axle 7; and
- a circular rim 9 supporting a circular tire 10; and
   - a plurality of wire spokes 18 connected at respective opposite radial ends to rim 9 and hub 8.

Preferably, axle 7 is fixed to sliders 13.

In particular, axle 7 extends on both sides of front wheel 3.

Axle 7 comprises (Figure 5):
- a central portion 14; and
   - a pair of end portions 15 (only one of which is shown in Figure 5) screwed insider relative seats 38 of relative sliders 13.

Being a driven wheel, front wheel 3 comprises a pair of bearings 17 (only one shown) interposed between hub 8 and axle 7 and on the opposite axial side of rim 9. Bearings 17 allow the rotation of hub 8 about axis D with respect to axle 7.

In greater detail, bearings 17 are interposed between hub 8 and central portion 14 of axle 7.

In the embodiment shown, rim 9 and tire 10 extend about axis A and wire spokes 18 extend orthogonally to axis A.

Front wheel 3 also comprises a pair of disk brake 11 angularly integral to hub 8 and adapted to interact with a not shown caliper to brake front wheel 3.

Each disk brake 11 extends symmetrically about an its own axis E.

Furthermore, motorcycle 1 comprises an anti-blocking system 19 (Figures 1, 4 and 5) known commonly as ABS, which prevents the blocking of front wheel 3 when caliper contacts and brakes disk brakes 11.

Very briefly, anti-blocking system 19 is configured to inhibit the braking action, in case the rotation speed of front wheel 3 is lower than threshold value while caliper contacts disk brakes 11.

With reference to Figures 1, 4 and 5, anti-blocking system 19 is shown limitedly to a transducer 35 for generating a signal associated to the rotational speed of front wheel 3 about axis A.

Transducer 35 is arranged on one side only of hub 8, rim 9 and tire 10 relative to axis A of wheel 3.

In the embodiment shown, transducer 35 substantially comprises:
- a disk 20 rotatably integral with front wheel 3, extending about an its own axis F and provided with a plurality of through grooves 16, which circumferentially extend about axis E; and
- a sensor 22 (Figures 1, 4 and 5) mounted on one of the fork 6 in a position facing grooves 16 parallel to axis A.

Sensor 22 is configured to detect the frequency of passage of grooves 16 in front of it and therefore to detect the rotational speed of front wheel 3 about axis A.

Sensor 22 can be a capacitive, inductive or optic sensor.

Advantageously, disk 20 is directly connected to hub 8.

In particular, disk 20 is directly connected to hub 8 by means of connecting means 21.

Preferably, hub 8 is also directly connected to each disk brake 11 by means of connecting means 23.

Axes D, E, F of hub 8, each disk brake 11 and relative disk 20 respectively coincide with one another, apart from the inevitable concentricity tolerances.

Axes D, E, F also coincide with axis A of wheel 3, apart from the inevitable concentricity tolerances.

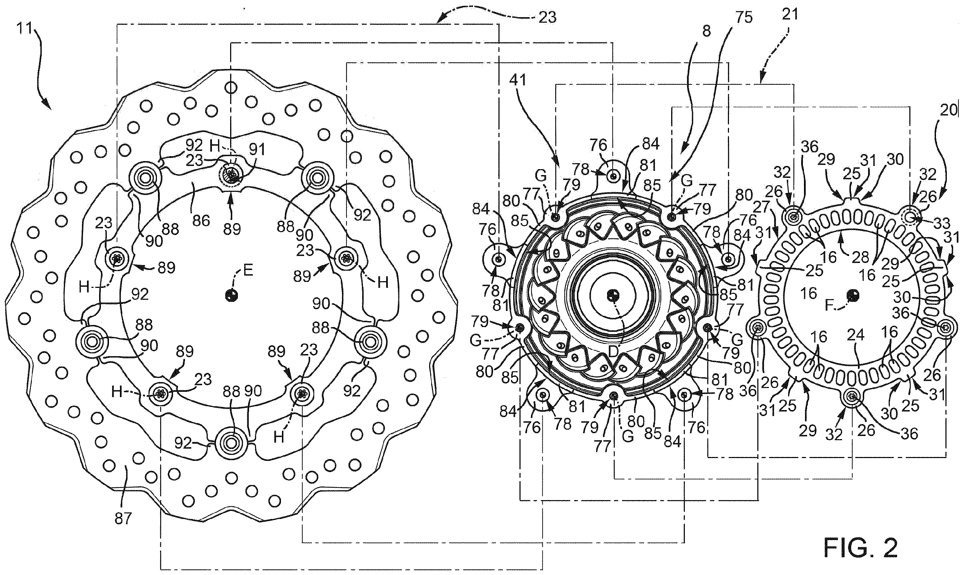

With reference to Figure 2, 4 and 5, disk 20 comprises, in turn,:
- a main body 24 extending about axis F and defining grooves 16; and
- a plurality, five in the embodiment shown, of protrusions 25 which protrude from body 24 on the opposite side of axis F and are circumferentially equi-spaced about axis F; and
- a plurality, five in the embodiment shown, of appendices 26 which protrude from body 24 on the opposite side of axis F and are circumferentially equi-spaced about axis F.

Preferably, protrusions 25 and appendices 26 are circumferentially offset with respect to one another relative to axis F.

Furthermore, protrusions 25 and appendices 26 are circumferentially alternate with respect to one relative to axis F.

Body 24 comprises an outer edge 27 from which protrusions 25 and appendices 26 radially outwards protrude, and an inner edge 28 opposite to edge 27.

Edges 27, 28 extend circularly about axis F.

Protrusions 25 and appendixes 26 extend, in particular, radially with respect to axis F.

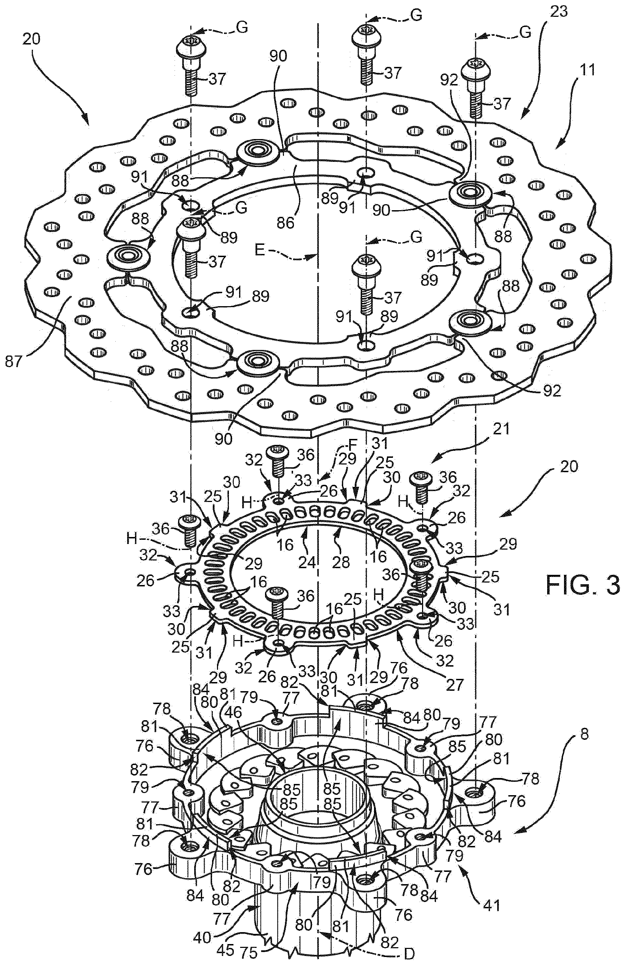

In particular, each protrusion 25 comprises (Figure 3):
- a pair of lateral sides 29, 30 circumferentially opposite to one another and protruding from outer edge 27; and
- a side 31, which is cirucmferentially interposed between sides 29, 30 and radially bounds relative protrusion 25 on the opposite side of outer edge 27.

Each appendix 26 comprises:
- an arch-shaped edge 32, which protrudes from outer edge 27 on the opposite side of axis F; and
- a circular hole 33, which is surrounded by edge 32. Hub 8 substantially comprises (Figures 2, 3 and 5):
- a hollow tube 40 (only part of which is shown in Figure 5), which extends parallel to axis D on the opposite axial side of rim 9 and is fitted to axle 7; and
- a pair of disks 41 (only one of which is shown in Figure 5), which protrude from tube 40 on respective axial sides of rim 9 and are axially opposite with respect to one another.

In greater detail, tube 40 defines opposite axial ends 46 of hub 8 relative to axis D. Disks 41 surround tube 40 and define an outer radial end of hub 8 relative to axis D.

Preferably, wire spokes 18 are fixed to a radially inner surface 42 of disks 41 of hub 8 (Figure 5).

In the embodiment shown, disk 20 is connected to one of disk 41 (the one shown in Figure 5) of hub 8 by means of connecting means 21.

Preferably, connecting means 21 comprise a plurality of screws 36 passing through respective holes 32 defined by respective appendices 26 of disk 20 of hub 8 and screwed inside respective screwed holes 79 of one of disk 41 of hub 8.

Each disk 41 is connected to a relative disk brake 11 by means of respective connecting means 23.

Preferebably, connecting means 23 comprise a plurality of screws 37 passing through respective holes 91 defined by disk 11 and screwed inside respective screwed holes 78 of one of disk 41 of hub 8.

In the embodiment shown, screws 36, 37 extend along respective axes G, H.

Preferably, axis H is radially interposed between axes D, E, F and G.

In other words, screws 37 are radially outer with respect to screw 36 relative to axes D, E, F.

Tube 40 comprises, in the embodiment shown in Figure 5, :
- a main cylindrical portion 45;
   - a pair of open axial ends 46 (only one of which is shown in Figure 5) opposite to one another with respect to portion 45 and defining respective cylindrical surfaces 47 parallel to axis D; and
   - a pair of annular projections 48 axially opposite to one another with respect to portion 45.

Each projection 48 is axially interposed between main portion 45 and a relative axial end 46 along axis D, and protrudes from relative end 46 and portion 45 towards axis D.

Each projection 48 is bound by:
- a surface 50 orthogonal to axis D on the side of relative fork 6; and
- a conical surface 51 inclined relative to axis D on the side opposite to relative fork 6.

Surfaces 50, 51 of each projection 48 converge towards one another on the side of axis D.

In particular, each surface 51 tapers proceeding parallel to axis D from portion 45 to relative end 46.

Surfaces 47 and relative surface 50 are orthogonal to one another and define a seat 61 for a relative bearing 17.

Each disk 41 protrudes from portion 45 and end 46 on the opposite radial side relative to axis D.

In detail, each disk 41 comprises:
- a ring 70, which defines an open axial end of disk 41 and is arranged on the side of relative fork 6; and
- a tapering portion 71, which is radially interposed between ring 70 and tube 40.

In particular, each disk 41 extends at increasing axial distances from axis D, proceeding from tube 40 towards relative ring 70.

With reference to Figure 3, each ring 70 comprises, in turn,:
- a tubular wall 75;
   - a plurality, five in the embodiment shown, of appendices 76 which radially protrude from wall 75 on the outer radial side thereof relative to axis D; and
   - a plurality, five in the embodiment shown, of cylindrical elements 77 which are formed by relative enlargements of wall 75.

In greater detail, appendices 76 and elements 77 are circumferentially equi-spaced relative to axis D.

Furthermore, appendices 76 and elements 77 are circumferentially offset with one another relative to axis D.

Appendices 76 are shaped as substantially cylindrical elements rounded to wall 75 and define respective through holes 78 engaged by respective screws 37 for the connection with disk brake 11.

Elements 77 are shaped substantially cylindrical rounded to wall 75 and defining respective holes 79 engaged by respective screws 36 for the connection with disk 20.

Holes 78 are, in the embodiments shown, radially outer relative to holes 79 with respect to axis D.

Holes 78, 79 extend along respective axes G, H.

Preferably, wall 75 of each ring 70 comprises a plurality, five in the embodiment shown, of circumferentially alternate arch-shaped portions 80, 81.

In particular, appendixes 76 radially protrude from relative portions 80 on the opposite side of axis D. Accordingly, holes 78 extends on the radial outer side of portions 80.

Elements 77 are circumferentially interposed along relative portions 81 and relative holes 79 are substantially circumferentially aligned with relative portions 81.

Preferably, the axial size of portion 80 is greater than the axial size of portions 81.

Furthermore, portions 80 axially extends beyond portions 81 towards relative forks 6 and parallel to axis D for relative stretches 82 shown in Figure 3.

Preferably, each stretch 82 comprises, in turn,:
- a radially outer surface 84 relative to axis D, which cooperates with disk brake 11 as it will be evident from the foregoing of the present description; and
- a radially inner surface 85 relative to axis D, which radially contacts side 29 of relative protrusions 25 of disk 20.

Surfaces 84, 85 of each stretch 82 are opposite to one another.

In the embodiment shown, surfaces 85 are lathed.

Each disk brake 11 (Figures 2 to 5) preferably comprises:
- a radially inner support ring 86 fixed to hub 8 by means of screw 37;
- a radially outer braking ring 87, which surrounds ring 86 about axis E; and
- a plurality of connecting elements 88 for connecting rings 86, 87 with one another.

In the embodiment shown, ring 86 comprises a plurality, five in the embodiment shown, of circumferentially alternate protrusions 89, 90.

In detail, protrusions 89 radially protrude from ring 86 on both sides side of axis E. Protrusions 90 radially protrude from ring 86 on the opposite side of axis E.

Protrusions 89 are arranged radially outer than relative stretches 82 and contact respective surfaces 84 on the side of axis E.

As evident from Figure 4, each protrusion 89 and relative portion 81 and protrusions 25 are radially aligned with respect to axis D, E, F.

Thanks to the radial contact between protrusions 89 and surfaces 84 of relative portion 81, each disk brake 11 is centred on hub 8.

Thanks to the radial contact between protrusions 25 and surfaces 85 of relative portion 81, disk 20 is centred on hub 8.

Ring 86 further comprises through holes 91, which are radially arranged at protrusions 89 and are axially superimposed to holes 78 of a relative disk 41 of hub 8.

Protrusions 90 radially face respective projections 92, which inwardly project from ring 87 with respect to axis E.

Each projection 90 is connected to a relative projection 92 by means of a corresponding connecting element 88.

Connecting elements 88 are cirucmferentially spaced, preferably equi-spaced, about axis E.

Hub 8 is manufactured by turning on a lathe (not shown).

In particular, hub 8 is mounted on a spindle of the lathe in the same position as shown in Figure 5.

The spindle is rotated about axis D and a tool is operated to turn the surfaces of hub 8 symmetrical to axis D.

Advantageously, surfaces 47 and/or surfaces 50 of projections 48 and surfaces 85 of stretches 82 are turned without removing hub 8 from the lathe.

When both surfaces 50 and surfaces 86 have been turned, hub 8 is dismounted from the spindle of the lathe.

In use, disk brakes 11 are coaxially mounted on respective disks 41 of hub 8 by means of connecting means 23. In this way, axes D and E coincide with one another apart from the inevitable tolerances.

Furthermore, disk 20 of sensor 22 is mounted onto one of disk 41 of hub 8 by means of connecting means 21. In this way, axes D and F coincide with one another apart from the inevitable tolerances.

During the advancement of motorcycle 1, rim 9 and tire 10 rotate with respect to axle 7 relative to common axes D, E, F thanks to the interposition of bearings 17.

Sensor 22 detects the frequency of passages of grooves 16 of disk 20 in front of it, thus detecting the rotational speed of wheel 7 about axis A.

Transducer 35 generates a signal associated to the rotational speed of wheel 3 of about axis A. This signal is used by anti-blocking system 19 for interrupting the braking action in case that rotational speed is lower than a threshold value.

The advantages of wheel 3 and of method for manufacturing a hub 8 according to the present invention will be clear from the above description.

In particular, disk 20 is directly connected to hub 8. In this way, the actual position of axis F with respect to axis D is affected only by the inevitable tolerances associated to the mounting of disk 20 on hub 8.

Moreover, contrary to the known solutions disclosed in the introductory part of the present description, the actual position of axis F with respect to axis D is in no way affected by the tolerances associated to the mounting of disk brakes 11 on hub 8.

Being actually no tolerance chain affecting the position of axis F of disk 20 with respect to axis D of hub 8, the precision and the repeatability of the measure of rotational speed of wheel 3 carried out by transducer 35 is highly increased in comparison with the known solutions.

Accordingly, the overall precision and repeatability of the anti-blocking system 19 is highly increased in comparison with the known solutions.

Connecting means 21 for directly connecting disk 20 to hub 8 comprise holes 33 defined by appendices 26 arranged on the opposite radial side of body 24 with respect to axis D.

Accordingly, screws 36 of connecting means do not interfere with the tool used for mounting metal wire spokes 18 on surface 42 of disk 41.

Furthermore, disk 41 of hub 8 comprises a plurality of surfaces 85 abutting against relative appendices 26 of disk 20. Surfaces 85 allow the centering of axis F of disk 20 with respect to axis D of hub 8.

Being surfaces 85 lathed, the precision of the centering is particularly high with a corresponding increase in the overall precision and repeatability of the anti-blocking system 19.

Furthermore, hub 8 is manufactured by turning. In particular, surfaces 57 and surfaces 50 of projections 48 defining seats 61 for bearings 17 and surfaces 85 of disk 41 contacting protrusions 25 of disk 20 are turned without removing hub 8 from the lathe.

In this way, there are substantially no tolerances due to the mounting/dismounting of hub 8 from lathe between the turnings of surfaces 50, 85 which could affect the actual positon of axis D relative to axis F.

This further increase in the overall precision and repeatability of the signal generated by the transducer 35 and in the operation of anti-blocking system 19.

Finally, it is apparent that modifications and variants not departing from the scope of protection of the claims may be made to wheel 3, 4 and method disclosed therein.

In particular, motorcycle 1 could comprise only one rear wheel 4 and two front wheels 3, or two rear wheels 4 and only one rear wheel 3.

When two rear or front wheels 3, 4 are provided, they could be mounted in such a way to lean with respect to body 2.

Wheel 3 could be a driven wheel and wheel 4 could be a driving wheel.

In case wheel 3 was a driven wheel, axle 7 would be rotatable about axis A relative to body 2 and hub 8 would be rotationally integral with axle 7.

Transducer 35 could be mounted on rear wheel 4 instead of on front wheel 3.

Wheel 3 could comprise only one disk brake 11 arranged on only one axial side of rim 9.

Wheel 3 could comprise only one fork 6 arranged on only one axial side of rim 9.

Wheels 3, 4 could be not comprise wire metal spokes 18 and could be casted wheel preferably made of an alloy of aluminum or magnesium and integrally defining hub 8 and rim 9.

## Claims

1. A wheel (3, 4) for a motorcycle (1), comprising:
- a hub (8) rotatable about a first axis (D); and
- a transducer (35) configured to generate a signal associated to the rotational speed of said hub (8) about said first axis (D);
said transducer (35) comprising a disk (20) rotatable about a second axis (F);
said disk (20) being directly connected to said hub (8) ;
**characterized in that** said hub (8) comprises at least one first surface (85) extending circumferentially relative to said first axis (D);
said first surface (85) abutting against a protrusion (25) of said disk (20) along a radial direction relative to said first axis (D);
said protrusion (25) protruding from an edge (27) of said disk (20);
said edge (27) bounding said disk (20) on the radially outer side relative to said first axis (D);
said protrusion (25) being radially inner with respect to said first surface (85) relative to said first axis (D).

2. The wheel of claim 1, **characterized in that** said wheel (3, 4) comprises first connecting means (21; 36, 33, 79) for directly connecting said disk (20) with said hub (8) ;
said disk (20) comprising, in turn, a main body (24) symmetric about said first axis (D);
said first connecting means (21; 36, 33, 79) comprising a plurality of first holes (33) defined by respective appendices (26) radially protruding from said main body (24) on the opposite radial side of said main body (24) with respect to said first axis (D).

3. The wheel of claim 2, **characterized in that** said main body (24) comprises a plurality of grooves (16) or projections, which extend radially to said first axis (D) and are circumferentially spaced relative to said first axis (D) .

4. The wheel of claim 2 or 3, **characterized by** comprising:
- a tyre (10);
- a plurality of wire spokes (18) which connect said tyre (10) to said hub (8);
said wire spokes (18) being fixed to the hub (8) in an inner radial position with respect to said first connecting means (21; 36, 33, 79) relative to said first axis (D).

5. The wheel of any one of the foregoing claims, **characterized by** comprising:
- at least one disk brake (11) rotatable about said third axis (E); and
- second connecting means (23; 37, 91, 78) for directly connecting said hub (8) and said disk brake (11) with one another;
said second connecting means (23; 37, 91, 78) being arranged radially outer with respect to said first connecting means (21; 36, 33, 79) relative to said first axis (D).

6. The wheel of any one of the foregoing claims, **characterized in that** said first surface (85) is lathed.

7. The wheel of any one of the foregoing claims, **characterized in that** said disk (20) comprises a plurality of projections (26);
said protrusion (25) being circumferentially interposed between a pair of consecutive said projections (26) of said disk (20);
said projections (26) defining respective said first holes (33) of said first connecting means (21; 36, 33, 79).

8. The wheel of any one of the foregoing claims, **characterized in that** said hub (8) comprises:
- a main portion (45), which extends along said axis (D) ; and
- at least one disk (41), which is arranged radially outer than said main portion (45) relative to said axis (D).

9. The wheel of claim 8, **characterized in that** said at least one disk (41) comprises:
- a tubular wall (75);
- at least one appendix (76), which radially protrudes from said wall (75) on the outer radial side relative to said axis (D) and defines a relative second hole (78) of said second connecting means (23; 37, 91, 78);
- at least one element (77), which is arranged along said appendix (76), radially inner with respect to said appendix (76) relative to said first axis (D), and defines a relative third hole (79) of said first connecting means (21, 36, 33, 79).

10. The wheel of claim 9, **characterized in that** said at least one appendix (76) and at least one element (77) are circumferentially offset with respect to said axis (D).

11. The wheel of claim 9 or 10, **characterized by** comprising a plurality of appendices (76) and elements (77), which are circumferentially alternate with respect to one another.

12. The wheel of any one of the foregoing claims, **characterized in that** said hub (8) comprises at least one third surface (84) opposite to said second surface (85) along a radial direction;
said third surface (84) abutting against a relative protrusion (89) of said disk brake (11) along a radial direction.

13. A motorcycle (1) comprising:
- a body (2) comprising at least one fork (6) relative to which said hub (8) is rotatably mounted;
- at least one front wheel (3) and at least one rear wheel (4), which are rotatably mounted with respect to said body (2); and
- an anti-blocking braking system (19) for preventing the blocking of one said front and rear wheel (3, 4) in case of braking and comprising said transducer (35);
said transducer (35) further comprising a sensor (22) for sensing the frequency of passage of said grooves (16) or projections in front of it, fixed to said fork (6) and facing said disk (20) parallel to said axis (D);
at least one of said front wheel and rear wheel (3, 4) being according to any one of the claims 3 to 11.

14. A method of manufacturing a hub (8) of a wheel (3, 4) for a motorcycle (1),
said wheel (3,4) comprising:
- a hub (8) rotatable about a first axis (D); and
- a transducer (35) configured to generate a signal associated to the rotational speed of said hub (8) about said first axis (D);
said transducer (35) comprising a disk (20) rotatable about a second axis (F);
said disk (20) being directly connected to said hub (8) ;
said method comprising the steps of:
i) mounting said hub (8) on a lathe;
ii) driving in rotation said hub (8) about an axis (D); and
iii) lathing a first surface (47, 50) of said hub (8), which extends circumferentially about said axis (D) and is intended to be coupled with a bearing (17);
iv) dismounting said hub (8) form said lathe;
**characterized by** comprising the step of:
v) lathing a second surface (85) of said hub (8), which extends circumferentially about said axis (D) and is intended to be coupled with a disk (20) of a transducer (35) configured to generate a signal associated to the rotational speed of said hub about said axis (8);
said step v) and iii) being carried out both before said step iv) and without removing said hub (8) from said lathe;
said hub (8) comprising at least one first surface (85) extending circumferentially relative to said first axis (D);
said first surface (85) abutting against a protrusion (25) of said disk (20) along a radial direction relative to said first axis (D);
said protrusion (25) protruding from an edge (27) of said disk (20);
said edge (27) bounding said disk (20) on the radially outer side relative to said first axis (D);
said protrusion (25) being radially inner with respect to said first surface (85) relative to said first axis (D).

## Patentansprüche

1. Rad (3, 4) für ein Motorrad (1), das aufweist:
- eine Nabe (8), die um eine erste Achse (D) rotierbar ist, und
- einen Messgeber (35), der konfiguriert ist, um ein Signal, das mit der Drehzahl der Nabe (8) um die erste Achse (D) assoziiert ist, zu erzeugen,
wobei der Messgeber (35) eine Scheibe (20), die um eine zweite Achse (F) rotierbar ist, aufweist,
wobei die Scheibe (20) mit der Nabe (8) direkt verbunden ist,
**dadurch gekennzeichnet, dass** die Nabe (8) zumindest eine erste Fläche (85), die sich relativ zu der ersten Achse (D) in Bezug auf den Umfang erstreckt, aufweist,
wobei die erste Fläche (85) sich gegen eine Vorragung (25) der Scheibe (20) entlang einer Radialrichtung relativ zu der ersten Achse (D) in Anlage befindet,
wobei die Vorragung (25) von einer Kante (27) der Scheibe (20) vorragt,
wobei die Kante (27) die Scheibe (20) an der radialen Außenseite relativ zu der ersten Achse (D) begrenzt,
wobei die Vorragung (25) in Bezug auf die erste Fläche (85) relativ zu der ersten Achse (D) radial innen ist.

2. Rad von Anspruch 1, **dadurch gekennzeichnet, dass** das Rad (3, 4) erste Verbindungsmittel (21; 36, 33, 79) zum direkten Verbinden der Scheibe (20) mit der Nabe (8) aufweist,
wobei die Scheibe (20) wiederum einen Hauptkörper (24), der um die erste Achse (D) symmetrisch ist, aufweist,
wobei die ersten Verbindungsmittel (21; 36, 33, 79) eine Mehrzahl von ersten Löchern (33) aufweisen, die durch jeweilige Fortsätze (26), die von dem Hauptkörper (24) radial vorragen, an der entgegengesetzten radialen Seite des Hauptkörpers (24) in Bezug auf die erste Achse (D) definiert sind.

3. Rad nach Anspruch 2, **dadurch gekennzeichnet, dass** der Hauptkörper (24) eine Mehrzahl von Nuten (16) oder Vorsprünge, die sich radial zu der ersten Achse (D) erstrecken und relativ zu der ersten Achse (D) in Bezug auf den Umfang beabstandet sind, aufweist.

4. Rad nach einem der Ansprüche 2 oder 3, **dadurch gekennzeichnet, dass** es aufweist:
- einen Reifen (10)
- eine Mehrzahl von Drahtspeichen (18), die den Reifen (10) mit der Nabe (8) verbinden,
wobei die Drahtspeichen (18) an der Nabe (8) bei einer inneren radialen Position in Bezug auf die ersten Verbindungsmittel (21; 36, 33, 79) relativ zu der ersten Achse (D) befestigt sind.

5. Rad nach einem der vorstehenden Ansprüche, **dadurch gekennzeichnet, dass** es aufweist:
- zumindest eine Scheibenbremse (11), die um die dritte Achse (E) rotierbar ist, und
- zweite Verbindungsmittel (23; 37, 91, 78) zum direkten Verbinden der Nabe (8) und der Scheibenbremse (11) miteinander,
wobei die zweiten Verbindungsmittel (23; 37, 91, 78) in Bezug auf die ersten Verbindungsmittel (21; 36, 33 ,79) relativ zu der ersten Achse (D) radial außen angeordnet sind.

6. Rad nach einem der vorstehenden Ansprüche, **dadurch gekennzeichnet, dass** die erste Fläche (85) gedreht ist.

7. Rad nach einem der vorstehenden Ansprüche, **dadurch gekennzeichnet, dass** die Scheibe (20) eine Mehrzahl von Vorsprüngen (26) aufweist,
wobei die Vorragung (25) zwischen einem Paar von aufeinanderfolgenden Vorsprüngen (26) der Scheibe (20) zwischengefügt ist,
wobei die Vorsprünge (26) jeweilig erste Löcher (33) der ersten Verbindungsmittel (21; 36, 33,79) definieren.

8. Rad nach einem der vorstehenden Ansprüche, **dadurch gekennzeichnet, dass** die Nabe (8) aufweist:
- einen Hauptabschnitt (45), der sich entlang der Achse (D) erstreckt, und
- zumindest eine Scheibe (41), die relativ zu der Achse (D) radial weiter außen als der Hauptabschnitt (45) angeordnet ist.

9. Rad nach Anspruch 8, **dadurch gekennzeichnet, dass** die zumindest eine Scheibe (41) aufweist:
- eine rohrförmige Wand (75),
- zumindest einen Fortsatz (76), der von der Wand (75) an der äußeren radialen Seite relativ zu der Achse (D) radial vorragt und ein relatives zweites Loch (78) der zweiten Verbindungsmittel (23; 37, 91, 78) definiert,
- zumindest ein Element (77), das entlang des Fortsatzes (76) angeordnet ist, wobei es in Bezug auf den Fortsatz (76) relativ zu der ersten Achse (D) radial innen ist, und ein relatives drittes Loch (79) der ersten Verbindungsmittel (21, 36, 33,79) definiert.

10. Rad nach Anspruch 9, **dadurch gekennzeichnet, dass** der zumindest eine Fortsatz (76) und zumindest ein Element (77) in Bezug auf die Achse (D) einen Abstand in Bezug auf den Umfang haben.

11. Rad nach Anspruch 9 oder 10, **dadurch gekennzeichnet, dass** es eine Mehrzahl von Fortsätzen (76) und Elementen (77), die in Bezug aufeinander in Bezug auf den Umfang abwechselnd sind, aufweist.

12. Rad nach einem der vorstehenden Ansprüche, **dadurch gekennzeichnet, dass** die Nabe (8) zumindest eine dritte Fläche (84), die zu der zweiten Fläche (85) entlang einer Radialrichtung entgegengesetzt ist, aufweist,
wobei die dritte Fläche (84) sich gegen eine relative Vorragung (89) der Scheibenbremse (11) entlang einer Radialrichtung in Anlage befindet.

13. Motorrad (1), das aufweist:
- eine Karosserie (2), die zumindest eine Gabel (6) aufweist, relativ zu der die Nabe (8) rotierbar montiert ist,
- zumindest ein Vorderrad (3) und zumindest ein Hinterrad (4), die in Bezug auf die Karosserie (2) rotierbar montiert sind, und
- ein Antiblockier-Bremssystem (19) zum Vermeiden des Blockierens von einem der Räder, Vorder- und Hinterrad (3, 4), im Fall eines Bremsens und das einen Messgeber (35) aufweist,
wobei der Messgeber (35) ferner einen Sensor (22) zum Fühlen der Frequenz eines Durchgangs der Nuten (16) oder Vorsprünge vor ihm aufweist, wobei er an der Gabel (6) befestigt ist und parallel zu der Achse (D) zu der Scheibe (20) weist,
wobei zumindest eines der Räder, Vorderrad und Hinterrad (3, 4), entsprechend einem der Ansprüche 3 bis 11 ist.

14. Verfahren eines Herstellens einer Nabe (8) eines Rades (3, 4) für ein Motorrad (1),
wobei das Rad (3, 4) aufweist:
- eine Nabe (8), die um eine erste Achse (D) rotierbar ist, und
- einen Messgeber (35), der konfiguriert ist, um ein Signal zu erzeugen, das mit der Drehzahl der Nabe (8) um die erste Achse (D) assoziiert ist,
wobei der Messgeber (35) eine Scheibe (20), die um eine zweite Achse (F) rotierbar ist, aufweist,
wobei die Scheibe (20) mit der Nabe (8) direkt verbunden ist,
wobei das Verfahren die Schritte aufweist:
i) Montieren der Nabe (8) an einer Drehmaschine,
ii) Antreiben in Rotation der Nabe (8) um eine Achse (D), und
iii) Drehen einer ersten Fläche (47, 50) der Nabe (8), die sich in Bezug auf den Umfang um die Achse (D) erstreckt und gemeint ist, um mit einem Lager (17) gekoppelt zu werden,
iv) Demontieren der Nabe (8) von der Drehmaschine,
durch ein Aufweisen des Schrittes gekennzeichnet:
v) Drehen einer zweiten Fläche (85) der Nabe (8), die sich um die Achse (D) in Bezug auf den Umfang erstreckt und gemeint ist, um mit einer Scheibe (20) eines Messgebers (35), der konfiguriert ist, um ein Signal zu erzeugen, das mit der Drehzahl der Nabe um die Achse (8) assoziiert ist, gekoppelt zu werden,
wobei der Schritt v) und iii) vor dem Schritt iv) und ohne ein Entfernen der Nabe (8) von der Drehmaschine beide ausgeführt werden,
wobei die Nabe (8) zumindest eine erste Fläche (85), die sich in Bezug auf den Umfang relativ zu der ersten Achse (D) erstreckt, aufweist,
wobei die erste Fläche (85) sich gegen eine Vorragung (25) der Scheibe (20) entlang einer Radialrichtung relativ zu der ersten Achse (D) in Anlage befindet,
wobei die Vorragung (25) von einer Kante (27) der Scheibe (20) vorragt,
wobei die Kante (27) an der radialen Außenseite relativ zu der ersten Achse (D) die Scheibe (20) begrenzt,
wobei die Vorragung (25) in Bezug auf die erste Fläche (85) relativ zu der ersten Achse (D) radial innen ist.

## Revendications

1. Roue (3, 4) pour un motocycle (1), comprenant :
- un moyeu (8) pouvant tourner autour d'un premier axe (D) ; et
- un transducteur (35) configuré pour générer un signal associé à la vitesse de rotation dudit moyeu (8) autour dudit premier axe (D) ;
ledit transducteur (35) comprenant un disque (20) pouvant tourner autour d'un deuxième axe (F) ;
ledit disque (20) étant raccordé directement audit moyeu (8) ;
**caractérisée en ce que** ledit moyeu (8) comprend au moins une première surface (85) s'étendant circonférentiellement relativement audit premier axe (D) ;
ladite première surface (85) butant contre une saillie (25) dudit disque (20) suivant une direction radiale relativement audit premier axe (D) ;
ladite saillie (25) faisant saillie d'un bord (27) dudit disque (20) ;
ledit bord (27) délimitant ledit disque (20) sur le côté radialement extérieur relativement audit premier axe (D) ;
ladite saillie (25) étant radialement intérieure par rapport à ladite première surface (85) relativement audit premier axe (D).

2. Roue selon la revendication 1, **caractérisée en ce que** ladite roue (3, 4) comprend des premiers moyens de raccordement (21 ; 36, 33, 79) pour raccorder directement ledit disque (20) audit moyeu (8) ;
ledit disque (20) comprenant, quant à lui, un corps principal (24) symétrique autour dudit premier axe (D) ;
lesdits premiers moyens de raccordement (21 ; 36, 33, 79) comprenant une pluralité de premiers trous (33) définis par des appendices (26) respectifs faisant saillie radialement dudit corps principal (24) sur le côté radial opposé dudit corps principal (24) par rapport audit premier axe (D).

3. Roue selon la revendication 2, **caractérisée en ce que** ledit corps principal (24) comprend une pluralité de gorges (16) ou de protubérances, qui s'étendent radialement audit premier axe (D) et sont espacées circonférentiellement relativement audit premier axe (D).

4. Roue selon la revendication 2 ou 3, **caractérisée en ce qu'**elle comprend :
- un pneu (10) ;
- une pluralité de rayons métalliques (18) qui raccordent ledit pneu (10) audit moyeu (8) ;
lesdits rayons métalliques (18) étant fixés au moyeu (8) dans une position radiale intérieure par rapport auxdits premiers moyens de raccordement (21 ; 36, 33, 79) relativement audit premier axe (D).

5. Roue selon l'une quelconque des revendications précédentes, **caractérisée en ce qu'**elle comprend :
- au moins un frein à disque (11) pouvant tourner autour dudit troisième axe (E) ; et
- des deuxièmes moyens de raccordement (23 ; 37, 91, 78) pour raccorder directement ledit moyeu (8) et ledit frein à disque (11) l'un à l'autre ;
lesdits deuxièmes moyens de raccordement (23 ; 37, 91, 78) étant agencés radialement extérieurs par rapport auxdits premiers moyens de raccordement (21 ; 36, 33, 79) relativement audit premier axe (D).

6. Roue selon l'une quelconque des revendications précédentes, **caractérisée en ce que** ladite première surface (85) est tournée.

7. Roue selon l'une quelconque des revendications précédentes, **caractérisée en ce que** ledit disque (20) comprend une pluralité de protubérances (26) ;
ladite saillie (25) étant interposée circonférentiellement entre une paire desdites protubérances (26) consécutives dudit disque (20) ;
lesdites protubérances (26) définissant lesdits premiers trous (33) respectifs desdits premiers moyens de raccordement (21 ; 36, 33, 79).

8. Roue selon l'une quelconque des revendications précédentes, **caractérisée en ce que** ledit moyeu (8) comprend :
- une portion principale (45), qui s'étend le long dudit axe (D) ; et
- au moins un disque (41), qui est agencé radialement à l'extérieur de ladite portion principale (45) relativement audit axe (D).

9. Roue selon la revendication 8, **caractérisée en ce que** ledit au moins un disque (41) comprend :
- une paroi tubulaire (75) ;
- au moins un appendice (76), qui fait saillie radialement de ladite paroi (75) sur le côté radial extérieur relativement audit axe (D) et définit un deuxième trou (78) relatif desdits deuxièmes moyens de raccordement (23 ; 37, 91, 78) ;
- au moins un élément (77), qui est agencé le long dudit appendice (76), radialement intérieur par rapport audit appendice (76) relativement audit premier axe (D), et définit un troisième trou (79) relatif desdits premiers moyens de raccordement (21 ; 36, 33, 79).

10. Roue selon la revendication 9, **caractérisée en ce que** ledit au moins un appendice (76) et ledit au moins un élément (77) sont décalés circonférentiellement par rapport audit axe (D).

11. Roue selon la revendication 9 ou 10, **caractérisée en ce qu'**elle comprend une pluralité d'appendices (76) et d'éléments (77), qui alternent circonférentiellement les uns par rapport aux autres.

12. Roue selon l'une quelconque des revendications précédentes, **caractérisée en ce que** ledit moyeu (8) comprend au moins une troisième surface (84) opposée à ladite deuxième surface (85) suivant une direction radiale ;
ladite troisième surface (84) butant contre une saillie relative (89) dudit frein à disque (11) suivant une direction radiale.

13. Motocycle (1) comprenant :
- une carrosserie (2) comprenant au moins une fourche (6) relativement à laquelle ledit moyeu (8) est monté rotatif;
- au moins une roue avant (3) et au moins une roue arrière (4), qui sont montées rotatives par rapport à ladite carrosserie (2) ; et
- un système de freinage antiblocage (19) pour empêcher le blocage de l'une desdites roues avant et arrière (3, 4) en cas de freinage et comprenant ledit transducteur (35) ;
ledit transducteur (35) comprenant en outre un capteur (22) pour capter la fréquence de passage desdites gorges (16) ou protubérances devant celui-ci, fixé à ladite fourche (6) et en regard dudit disque (20) parallèle audit axe (D) ;
au moins l'une desdites roue avant et roue arrière (3, 4) étant telle que selon l'une quelconque des revendications 3 à 11.

14. Procédé de fabrication d'un moyeu (8) d'une roue (3, 4) pour un motocycle (1),
ladite roue (3, 4) comprenant :
- un moyeu (8) pouvant tourner autour d'un premier axe (D) ; et
- un transducteur (35) configuré pour générer un signal associé à la vitesse de rotation dudit moyeu (8) autour dudit premier axe (D) ;
ledit transducteur (35) comprenant un disque (20) pouvant tourner autour d'un deuxième axe (F) ;
ledit disque (20) étant raccordé directement audit moyeu (8) ;
ledit procédé comprenant les étapes de :
i) montage dudit moyeu (8) sur un tour ;
ii) entraînement en rotation dudit moyeu (8) autour d'un axe (D) ; et
iii) tournage d'une première surface (47, 50) dudit moyeu (8), qui s'étend circonférentiellement autour dudit axe (D) et est destinée à être accouplée à un palier (17) ;
iv) sortie dudit moyeu (8) dudit tour ;
**caractérisé en ce qu'**il comprend l'étape de :
v) tournage d'une deuxième surface (85) dudit moyeu (8), qui s'étend circonférentiellement autour dudit axe (D) et est destinée à être accouplée à un disque (20) d'un transducteur (35) configuré pour générer un signal associé à la vitesse de rotation dudit moyeu autour dudit axe (8) ;
lesdites étapes v) et iii) étant toutes deux réalisées avant ladite étape iv) et sans enlever ledit moyeu (8) dudit tour ;
ledit moyeu (8) comprenant au moins une première surface (85) s'étendant circonférentiellement relativement audit premier axe (D) ;
ladite première surface (85) butant contre une saillie (25) dudit disque (20) suivant une direction radiale relativement audit premier axe (D) ;
ladite saillie (25) faisant saillie d'un bord (27) dudit disque (20) ;
ledit bord (27) délimitant ledit disque (20) sur le côté radialement extérieur relativement audit premier axe (D) ;
ladite saillie (25) étant radialement intérieure par rapport à ladite première surface (85) relativement audit premier axe (D).
